# EUROPEAN PATENT SPECIFICATION

(11) **EP 1 338 232 B1**
(45) Date of publication and mention of the grant of the patent: **20.04.2005**
(21) Application number: 03250691.7
(22) Date of filing: 04.02.2003
(51) Int. Cl.: A47J 31/06

(54) **Method of making coffee and coffee maker**
Verfahren zur Herstellung von Kaffee und Kaffeemaschine
Procédé de préparation de café et machine à café

(30) Priority: 19.02.2002 US 78889
(43) Date of publication of application: 27.08.2003
(73) Proprietor: Simatelex Manufactory Company Limited, Chai Wan, Hong Kong (CN)
(72) Inventor: Fung, Chi Chung, c/o Simatelex Manuf. Co., Ltd., Chai Wan, Hong Kong (CN); Leung, Chi Wah, c/o Simatelex Manuf. Co., Ltd., Chai Wan, Hong Kong (CN); Luk, Shek Chuen, c/o Simatelex Manuf. Co., Ltd., Chai Wan, Hong Kong (CN)
(74) Representative: Godwin, Edgar James

(56) References cited:
- EP-A- 0 131 935
- EP-A- 1 029 485
- WO-A-02/45558
- WO-A-99/49767
- DE-A- 1 913 193

## Description

The invention relates to methods of making coffee and to coffee makers, and in particular to drip-type coffee makers.

One method of making coffee includes passing heated water through coffee grinds in order to infuse the water with coffee flavour and aroma. A common type of coffee maker that employs this method is the so-called "drip-type" coffee maker. In order to make good coffee the water should evenly wet the grinds.

Drip-type coffee makers comprise a water reservoir and a brew basket for receiving coffee grinds. A delivery tube or other water passage takes water from the water reservoir, through an in-line water heater, and delivers it to a spreader above coffee grinds in the brew basket. The heated water passes through the coffee grinds and in to a carafe, cup or other vessel. This type of coffee maker is described in EP publication 1029485A1.

A problem with drip-type coffee makers is uneven wetting and extraction of the coffee grinds. The spreader attempts to distribute the heated water evenly over the coffee grinds however, the heated water generally flows through the centre portion of the brew basket. There is typically less wetting of the coffee grinds at the outer edges of the brew basket. This results in uneven extraction of the coffee grinds and has an adverse affect on the quality of the coffee beverage.

It is an object of the present invention to overcome or ameliorate the above disadvantage, or at least to provide the public with a useful alternative.

According to a first aspect of the invention there is provided a method of making coffee in a drip-type coffee maker according to independent claim 1.

According to a second aspect of the invention there is provided a coffee maker according to independent claim 2.

Preferably, buoyant controller engages with a holding means when the level of water rises to the predetermined level.

Preferably, the buoyant controller includes a first buoyant body member and a second body member bearing the aperture closure, the body members being slidably engaged between first and second positions for moving the closure between the first and second positions when the level of water rises to the predetermined level.

Preferably, the first buoyant member engages with a holding means when the water level reaches the predetermined level.

Preferably, the coffee maker includes a lid with a magnet, and wherein the upper buoyant body member magnetically engages the magnet when the level of water reaches the predetermined level.

Further aspects of the invention will become apparent from t he following description which is given by way of example only.

Embodiments of the invention will now be described by way of example only and with reference to the accompanying drawings in which:
Figure 1 illustrates a sectional view through a drip-type coffee maker according to the invention,
Figure 2 illustrates a detailed view of the brew basket prior to delivery of heated water,
Figure 3 illustrates a detailed view of the brew basket when half full of water, and
Figure 4 illustrates a detailed view of the brew basket after draining of the water.

The invention provides for making coffee in a drip-type coffee maker by adding heated water to a brew basket containing coffee grinds and allowing the water to accumulate in brew basket. The water is allowed to sit in the brew basket for a predetermined period to evenly wet and extract the coffee grinds. After the predetermined period an aperture at the bottom of the brew basket is opened so that the infused water can drain into a coffee carafe, cup or other vessel.

In the preferred embodiment the aperture in the bottom of the brew basket is closed by a closure, such as a plug, controlled by a buoyant body. When the water level in the brew basket rises to a predetermined level the buoyant body lifts the closure allowing the water to drain through the aperture. Heated water must accumulate in the brew basket before the aperture is opened. Sufficient time is provided for the water to fully wet the coffee grinds and become infuse with coffee favour and aroma.

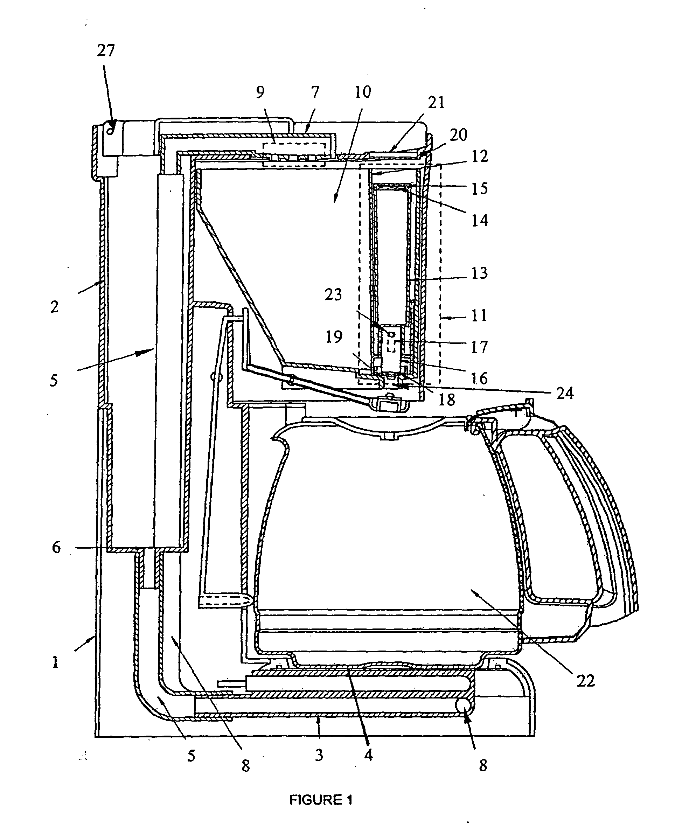

Referring to Figure 1, a drip-type coffee maker 1, for use in the invention, includes a water reservoir 2 for storage of water to be heated. The reservoir 2 has a water outlet 6 at its bottom end.

An in-line water heater 3 doubles as a hot plate 4 for coffee carafe 22. The in-line water heater has a heating passage 8 through it for receiving a water passage 5 from the water outlet 6.

The water passage 5 passes through the in-line heater 3 and up to a spreader 7 having apertures 9 located above a brew basket 10. Spreader 7 distributes heated water over coffee grinds (not shown) in the brew basket 10. The brew basket 10 is in fluid communication with an aperture 19 for draining infused water from the brew basket 10 into the coffee carafe 22.

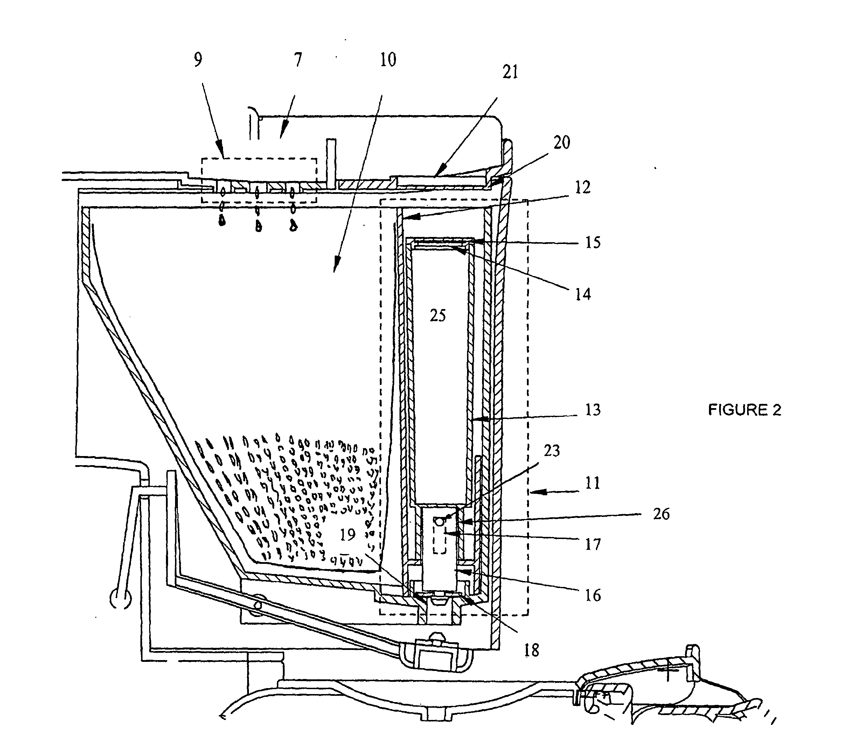

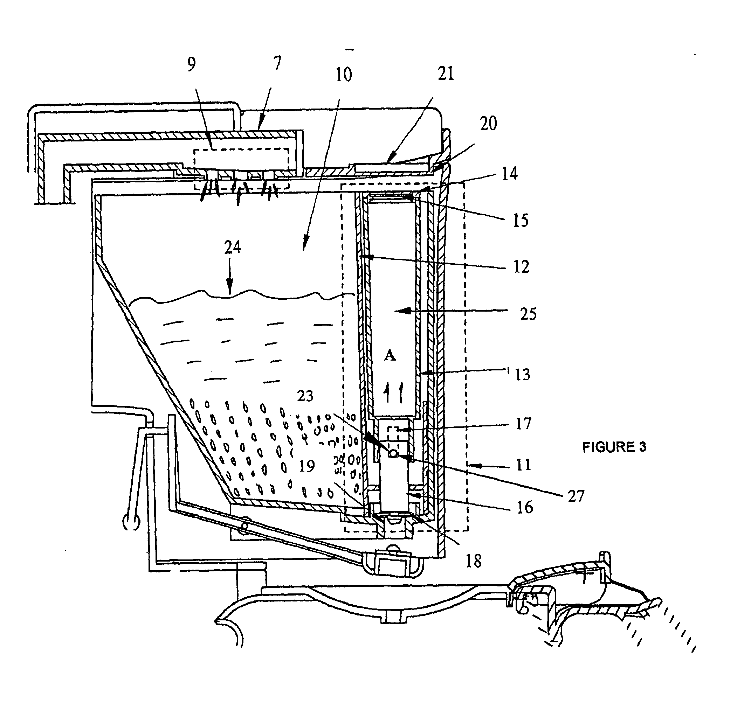

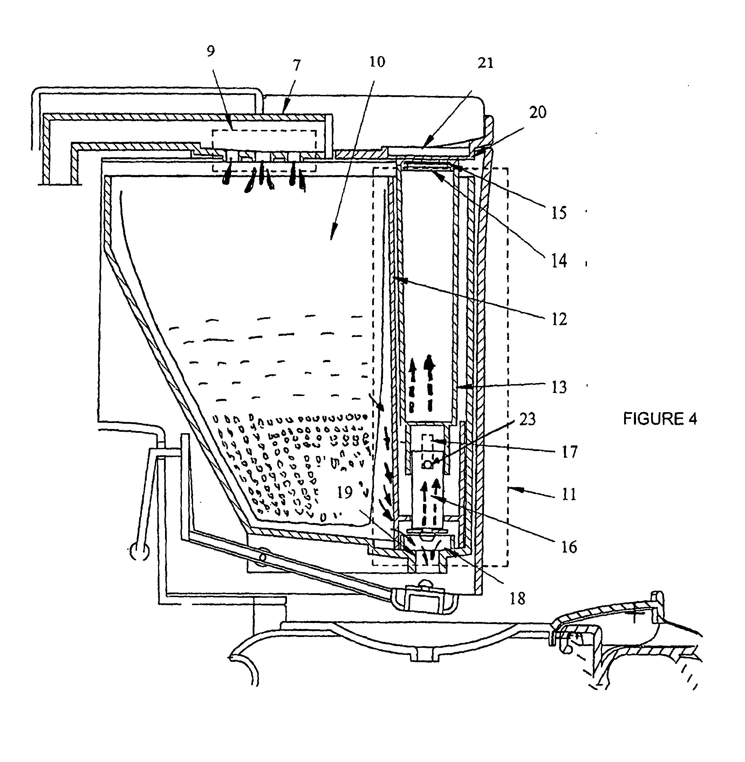

Referring to Figure 2, dispose above aperture 19 is a support frame 12 that slidably receives a buoyant controller 25. The buoyant controller 25 includes an upper buoyant body member 13 that is slidably engaged with a lower body member 16. At its lower end, buoyant body 13 has a downwardly extending skirt 26 into which lower body member 16 is slidably received. The buoyant body member 13 and lower body member 16 are slidably engaged by a pin 23 and slot 17 arrangement so as to be moveable relative to each other from a first position (as shown in Figure 2) to a second position (as shown in Figures 3 and 4).

The lower end of lower body member 16 bears a closure for aperture 19 in the form of washer 18. The buoyant control 25 is slidably disposed within frame 12 so as be vertically buoyantly displaceable as the water level in brew basket 10 changes.

The coffee maker 1 has a lid 20 for covering the brew basket 10 and spreader 7. The lid 20 is engaged at a hinge 27, and can lifted to allow removal and/or cleaning of the brew basket and/or filter. In normal use, the lid 20 is in place to retain heat within the brew basket 10 and to stop contaminates entering the brew basket and water splashing out of the brew basket.

Immediately above frame 12 lid 20 bears a magnet 21. The top end 14 of buoyant controller 25 has a metal disk 15 so that it can be magnetically received and held against magnet 21 on lid 20.

Prior to use, with no water in the brew basket, buoyant housing 13 and lower housing 16 of buoyant controller 25 are in their first position, and are resting at the bottom of frame 12 so that washer 18 closes aperture 19.

When the coffee maker 1 activated heated water is delivered the brew basket through spreader apertures 9 in known manner. The water is retained within the brew basket because aperture 19 is close by washer 18.

Referring to Figure 3, as the water level 24 within the brew basket 10 rises buoyant body member 13 of controller 25 is buoyantly displaced upwards in the direction of arrow A. Lower body member 16, which has a relative density greater than water, remains in its initial position with washer 18 closing aperture 19. Buoyant body member 13 can be slidably displace upwards by operation of slot 17 and pin 23 arrangement until buoyant body member 13 and lower body member 16 are in their second relative position. When buoyant body member 13 and lower body member 16 are in their second relative position the brew basket will be full to substantially its desired level. Buoyant body 13 cannot be upwardly displaced further without lifting lower body member 16 because pin 23 bears against end 27 of slot 17. In addition, at this stage metal disk 15 is within the magnetic influences of magnet 21.

Referring to Figure 4, any further increase in water level 24 will cause lower body member 16 to be displace upwardly lifting washer 18 from aperture 19. Also, and importantly, metal disk 15 will come within the influence of magnet 21 and buoyant controller 25 will be magnetically displaced upwards so that metal strip 15 is received against magnet 21 and held there. Washer 18 is now fully clear of aperture 19 and the infused water in brew basket 10 can drain through aperture 19 into coffee carafe 22. As the water level recedes buoyant controller 25 is held against lid 20 by magnet 21 keeping the aperture 19 open.

By the invention, heated water is retained within the brew basket to fully wet and extract the coffee grinds. When the water level within the brew basket reaches a predetermined level the aperture is opened to allow the infused water to drain into the coffee carafe.

After a brewing cycle lid 21 will be lifted so that the brew basket can be cleaned and fresh coffee grinds place therein. When this is done the magnetic coupling between magnet 21 and metal disk 15 is broken and buoyant controller 25 returns to its lower position to close aperture 19 for the next brew cycle.

Where in the foregoing description reference has been made to integers or elements have known equivalents then such are included as if individually set forth.

Embodiments of the invention have been described, however it is understood that variations, improvement or modifications can take place without departure from the scope of the appended claims.

## Claims

1. A method of making coffee in a drip-type coffee maker including providing coffee grounds within a brew basket (10), dispensing heated water in to the brew basket (10), and providing a closure (18) for restricting a flow of water through the brew basket (10) such that a level of water in the basket (10) rises to a predetermined level,
**characterised in** the method includes providing a buoyant controller (25) for opening the closure (18) when the level of water rises to the predetermined level to permit the flow of water through the basket (10).

2. A coffee maker including a water reservoir (2), an in-line water heater (3), a brew basket (10) for receiving coffee grinds, a water passage (5) between the reservoir (2) and the brew basket (10), the passage (5) passing through the in-line water heater (3) for delivering heated water to the brew basket (10), and a closure (18) having a first position for restricting a flow of water through the brew basket (10) such that a level of water in the basket rises to a predetermined level and a second position for permitting the flow of water through the brew basket (10),
**characterised in that** the coffee maker includes a buoyant controller (25) for moving the closure (18) to the second position when the level of water in the brew basket (10) rises to the predetermined level.

3. A coffee maker as claimed in claim 2 wherein the buoyant controller (25) engages with a holding means (21) when the level of water rises to the predetermined level.

4. A coffee maker as claimed in claim 3 wherein the buoyant controller (25) includes a first buoyant body member (13) and a second body member (16) bearing the aperture closure (18), the body members (13, 16) being slidably engaged between first and second positions for moving the closure (18) between the first and second positions when the level of water rises to the predetermined level.

5. A coffee maker as claimed in claim 4 wherein the first buoyant member (13) engages with a holding means (21) when the water level reaches the predetermined level.

6. A coffee maker as claimed in claim 5 including a lid (20) with a magnet (21), and wherein the upper buoyant body member (13) magnetically engages the magnet (21) when the level of water reaches the predetermined level.

## Patentansprüche

1. Verfahren zur Herstellung von Kaffee in einer Tropfkaffeemaschine, das umfaßt: Bereitstellen von Kaffeemahlgut innerhalb eines Brühsiebbehälters (10); Ausgeben von erhitztem Wasser in den Brühsiebbehälter (10); und Bereitstellen eines Verschlusses (18) für das Begrenzen des Wasserflusses durch den Brühsiebbehälter (10), so daß ein Wasserniveau im Siebbehälter (10) auf ein vorgegebenes Niveau ansteigt;
**dadurch gekennzeichnet, daß** das Verfahren das Bereitstellen eines Schwimmreglers (25) für das Öffnen des Verschlusses (18) umfaßt, wenn das Wasserniveau auf das vorgegebene Niveau ansteigt, um den Wasserfluß durch den Siebbehälter (10) zu gestatten.

2. Kaffeemaschine, die umfaßt: einen Wasserbehälter (2); einen Reihenwassererhitzer (3); einen Brühsiebbehälter (10) für das Aufnehmen von Kaffeemahlgut; einen Wasserkanal (5) zwischen dem Behälter (2) und dem Siebbehälter (10), wobei der Kanal (5) durch den Reihenwassererhitzer (3) für das Liefern von erhitztem Wasser zum Brühsiebbehälter (10) hindurchgeht; und einen Verschluß (18) mit einer ersten Position für das Begrenzen eines Wasserflusses durch den Brühsiebbehälter (10), so daß ein Wasserniveau im Siebbehälter auf ein vorgegebenes Niveau ansteigt, und einer zweiten Position für das Gestatten des Wasserflusses durch den Brühsiebbehälter (10);
**dadurch gekennzeichnet, daß** die Kaffeemaschine einen Schwimmregler (25) für das Bewegen des Verschlusses (18) in die zweite Position umfaßt, wenn das Wasserniveau im Brühsiebbehälter (10) auf das vorgegebene Niveau ansteigt.

3. Kaffeemaschine nach Anspruch 2, bei der der Schwimmregler (25) mit einer Halteeinrichtung (21) in Eingriff kommt, wenn das Wasserniveau auf das vorgegebene Niveau ansteigt.

4. Kaffeemaschine nach Anspruch 3, bei der der Schwimmregler (25) ein erstes Schwimmkörperelement (13) und ein zweites Körperelement (16), das den Öffnungsverschluß (18) trägt, umfaßt, wobei die Körperelemente (13, 16) verschiebbar zwischen der ersten und der zweiten Position für das Bewegen des Verschlusses (18) zwischen der ersten und der zweiten Position in Eingriff gebracht werden, wenn das Wasserniveau auf das vorgegebene Niveau ansteigt.

5. Kaffeemaschine nach Anspruch 4, bei der das erste Schwimmelement (13) mit einer Halteeinrichtung (21) in Eingriff kommt, wenn das Wasserniveau das vorgegebene Niveau erreicht.

6. Kaffeemaschine nach Anspruch 5, die einen Deckel (20) mit einem Magnet (21) umfaßt, und bei der das obere Schwimmkörperelement (13) magnetisch mit dem Magnet (21) in Eingriff kommt, wenn das Wasserniveau das vorgegebene Niveau erreicht.

## Revendications

1. Procédé de préparation de café dans une cafetière du type goutte-à-goutte englobant les étapes de placement de café moulu dans un panier d'infusion (10), de distribution d'eau chauffée dans le panier d'infusion (10) et de fourniture d'un élément de fermeture (18) pour restreindre l'écoulement d'eau à travers le panier d'infusion (10), de sorte qu'un niveau de l'eau dans le panier (10) atteint un niveau prédéterminé;
**caractérisé en ce que** le procédé englobe l'étape de fourniture d'un régulateur flottant (25) destiné à ouvrir l'élément de fermeture (18) lorsque le niveau de l'eau atteint le niveau prédéterminé, pour permettre l'écoulement de l'eau à travers le panier (10).

2. Cafetière englobant un réservoir d'eau (2), un chauffe-eau en ligne (3), un panier d'infusion (10) pour recevoir du café moulu, un passage d'eau (5) entre le réservoir (2) et le panier d'infusion (10), le passage (5) traversant le chauffe-eau en ligne (3) pour distribuer l'eau chauffée vers le panier d'infusion (10); et un élément de fermeture (18) comportant une première position pour restreindre un écoulement d'eau à travers le panier d'infusion (10), de sorte qu'un niveau de l'eau dans le panier atteint un niveau prédéterminé, et une deuxième position pour permettre l'écoulement de l'eau à travers le panier d'infusion (10);
**caractérisé en ce que** la cafetière comporte un régulateur flottant (25) destiné à déplacer l'élément de fermeture (18) vers la deuxième position lorsque le niveau d'eau dans le panier d'infusion (10) atteint le niveau prédéterminé.

3. Cafetière selon la revendication 2, dans laquelle le régulateur flottant (25) s'engage dans un moyen de retenue (21) lorsque le niveau d'eau atteint le niveau prédéterminé.

4. Cafetière selon la revendication 3, dans laquelle le régulateur flottant (25) englobe un premier élément de corps flottant (13) et un deuxième élément de corps (16) supportant l'élément de fermeture de l'ouverture (18), les éléments de corps (13, 16) étant engagés par glissement entre les première et deuxième positions pour déplacer l'élément de fermeture (18) entre les première et deuxième positions lorsque le niveau d'eau atteint le niveau prédéterminé.

5. Cafetière selon la revendication 4, dans laquelle le premier élément flottant (13) s'engage dans un moyen de retenue (21) lorsque le niveau d'eau atteint le niveau prédéterminé.

6. Cafetière selon la revendication 5, englobant un couvercle (20) avec un aimant (21), l'élément de corps flottant supérieur (13) s'engageant de manière magnétique dans l'aimant (21) lorsque le niveau d'eau atteint le niveau prédéterminé.
